# EUROPÄISCHE PATENTANMELDUNG

(11) **EP 1 136 751 A1**
(43) Veröffentlichungstag der Anmeldung: **26.09.2001**
(21) Anmeldenummer: 01104017.7
(22) Anmeldetag: 20.02.2001
(51) Int. Cl.: F21V 8/00

(54) **Hinweis- und Sicherheitsleuchte**

(30) Priorität: 22.03.2000 DE 10014023
(71) Anmelder: R. Stahl Schaltgeräte GmbH, D-74653 Künzelsau (DE)
(72) Erfinder: Würz, Helmut, 74676 Niedernhall (DE)
(74) Vertreter: Patentanwälte Rüger, Barthelt & Abel

(57) **Zusammenfassung**

Eine Hinweisleuchte (1) weist ein Gehäuse (2) auf, in dem seitlich zwei Zeilen von Leuchtdioden (44) angeordnet sind. Die Leuchtdiodenzeilen beleuchten einen Reflektor (17), der das Licht der Leuchtdioden (44) in Richtung auf einen lichtdurchlässigen Bildträger (38) reflektiert. Bei einer anderen Ausführungsform trägt der Reflektor selbst das Bild d.h. das Bild wird im Auflichtverfahren mit Hilfe von Leuchtdiodenzeilen beleuchtet.

## Beschreibung

In gewerblich genutzten und/oder öffentlich zugänglichen Räumen werden Hinweis- und Sicherheitsleuchten verwendet, um beispielsweise den nächsten Fluchtweg anzuzeigen. Sie werden auch verwendet für Werbezwecke und sonstige Signalisierungsfunktionen.

An diese Art von Leuchten wird die Anforderung gestellt, im allgemeinen relativ flach zu bauen, damit sie auf einer Wand befestigt werden können, ohne allzu sehr auf der Wand aufzutragen.

Zur Beleuchtung ist es bekannt, das Piktogramm oder den Text auf einer lichtdurchlässige Kunststoffscheibe aufzubringen beispielsweise im Druckverfahren. Diese das Bild tragende Scheibe wird mittels einer seitlich angebrachten Leuchte streifen beleuchtet. Soll das Bild von hinten beleuchtet werden, wird die Kunststoffscheibe an einer Seitenkante mit einer Lampe bestrahlt.

Die Anordnung ist zwar relativ flach, führt aber zu einer ungenügenden Ausleuchtung des Bildes. Ab einem bestimmten Entfernung von der Lichtquelle treffen die Lichtstrahlen unter einem Winkel auf die Grenzfläche auf, bei dem Totalreflexion auftritt, womit ab diesem Bereich praktisch kein Lichtaustritt mehr zu beobachten ist. Das Bild ist ab dieser Stell dunkel.

Dieses Phänomen wird durch die aufgeklebte Bildträgerfolie und die dadurch hervorgerufenen Welligkeiten geringfügig abgeschwächt. An dem grundsätzlichen Problem der schlechteren Beleuchtung von Bildteilen, die von beleuchteten Rand der Scheibe etwas weiter abliegen ändert dies jedoch nichts.

Es ist ferner bekannt, Hinweisschilder mit einer separaten Leuchte, die sich deutlich im Abstand vor dem Hinweisschild befindet zu beleuchten.

Ausgehend hiervon ist es Aufgabe der Erfindung ein Leuchtschild, das als Hinweis- oder Signalleuchte verwendet werden kann, so zu gestalten, dass eine gleichmäßige Ausleuchtung des Bildes erzielt wird, während andererseits die Bauhöhe (Dicke) klein gehalten werden kann.

Diese Aufgabe wird erfindungemäß durch die Hinweisleuchte mit den Merkmalen des Anspruchs 1 oder die Hinweisleuchte mit den Merkmalen des Anspruches 2 gelöst.

Die Verwendung von Leuchtdioden gestattet es insgesamt eine extreme flache Anordnung zu erhalten. Erstaunlicherweise hat sich gezeigt, dass trotz der flachen Gestaltung und dem dementsprechend flachen Eintreffwinkel des Lichtes dennoch eine gute Ausleuchtung des Bildes erzielbar ist. Die Ausleuchtung ist sowohl im Durchlicht als auch im Auflicht gut und gleichmäßig.

Die Ausleuchtung kann verbessert werden, wenn mehrere Leuchtdioden in einer Zeile oder Reihe dicht nebeneinander über die gesamte Länge einer Kante des Gehäuses angeordnet werden.

Eine noch bessere Ausleuchtung wird erzielt, wenn wenigstens längs zweier Kanten derartige Reihen oder Zeilen aus Leuchtdioden vorgesehen werden.

Die Leuchtdioden können gleichfarbig sein oder in unterschiedlichen Farben strahlen, je nachdem, welcher Lichteffekt gewünscht ist. Gegebenfalls kann mit unterschiedlichen farbigen Leuchtdioden im Gesamteindruck ein nahezu weißes Licht zusammen gemischt werden. Wenn weißes Licht gewünscht wird, ist es jedoch von Vorteil Leuchtdioden zu verwenden, die von Haus aus mit weißem Licht leuchten.

Bei der seitlichen Anordnung der Leuchtdioden geht insbesondere im Fall des Auflichtes jenes Licht für die Beleuchtung des Bildträgers verloren, das ausgehend von den Leuchtdioden nicht auf den Bildträger fällt, sondern in den freien Raum gestrahlt wird. Um diesen Anteil zu vermindern, ist es von Vorteil vor den Leuchtdioden ein Prisma anzuordnen, das dafür sorgt, dass ein Großteil des von den Leuchtdioden kommenden Lichtes in Richtung auf den Bildträger ausgerichtet wird. Dadurch kann es vermieden werden die Leuchtdioden im Winkel auszurichten, was die Bauhöhe wieder vergrößern würde.

Die Verwendung eines Prismas ist auch vorteilhaft, wenn der Bildträger im Durchlicht beleuchtet wird, weil weit abliegende Bereiche des Bildträgers von den Leuchtdioden unter einem sehr flachen Auftreffwinkel beleuchtet werden. Dies führt dazu, dass das Licht, anstatt in den Bildträger einzudringen von diesem weg reflektiert wird. Es ist auch hier günstiger, möglich viel Licht auf den Reflektor zu bringen, um die Ausleuchtung zu verbessern.

Der Strahlengang kann weiter vorteilhaft beeinflusst werden, wenn eine Seitenfläche des Prismas zylinderförmig oder annähernd zylinderförmig gekrümmt ist, wobei die Krümmungsachse oder die Schar der Krümmungsachsen parallel zu der Reihe von Leuchtdioden liegt.

Beim Betrieb der Hinweisleuchte mit Durchlicht kann der Reflektor diffus reflektierend ausgebildet werden ohne besondere Vorzugsrichtung. Ein solcher Reflektor ist verhältnismäßig kostengünstig. Eine bessere Ausleuchtung bzw. ein helleres Bild lässt sich jedoch mit einem Reflektor erreichen, der gerichtet reflektiert. Ein solcher Reflektor kann sich beispielsweise aus einzelnen Spiegeln oder diffus reflektierenden Streifen zusammensetzen, deren Winkel so gewählt ist, dass das von den Leuchtdioden kommende Licht im Wesentlichen senkrecht zu dem Bildträger reflektiert wird.

Das neue Leuchtschild läßt sich aufgrund der Verwendung von Leuchtdioden in sehr einfacher Weise explosionsgeschützt ausführen. Die Temperaturen der Leuchtdioden an der Oberfläche erfüllen im allgemeinen die Sicherheitsvorschriften des Explosionsschutzes.

Um Platz für die Vorschaltgeräte für die Leuchtdioden zu schaffen, kann das Gehäuse im Bereich der Leuchtdioden verdickt ausgeführt werden bzw. es springt die Rückseite des Gehäuses im Bereich des Reflektors oder Bildträgers zurück.

Der Reflektor kann je nach Ausführungsform zumindest einen Teil der Gehäuserückwand ausmachen bzw. unmittelbar durch die entsprechende Fläche der Gehäuserückwand gebildet sein.

Im übrigen sind Weiterbildungen der Erfindung Gegenstand von Unteransprüchen. In der Zeichnung sind Ausführungsbeispiele des Gegenstandes der Erfindung dargestellt. Es zeigen:
Fig. 1 die erfindungsgemäße Hinweisleuchte in einer perspektivischen Gesamtansicht,
Fig. 2 die erfindungsgemäße Hinweisleuchte in einer perspektivischen Explosionsdarstellung,
Fig. 3 einen vergrößerten Schnitt längs der Linie III/III nach Fig. 1 und
Fig. 4 eine Prinzipdarstellung eines gerichtet reflektierenden Reflektors.

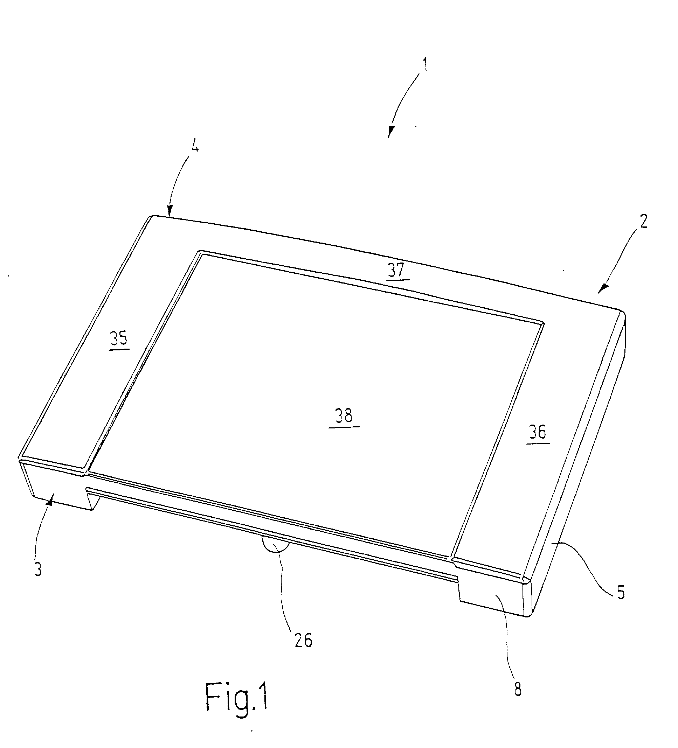

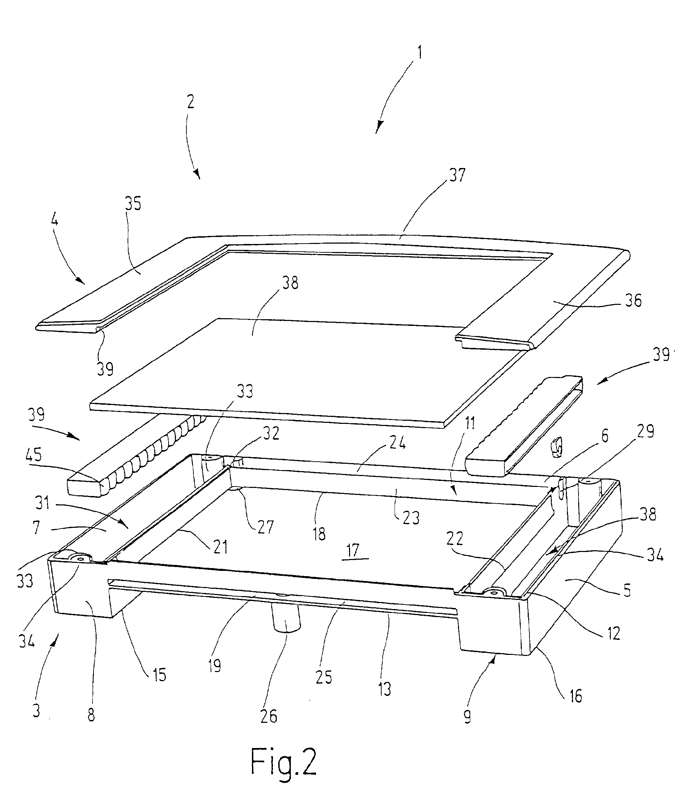

In den Fig. 1 und 2 ist eine Hinweisleuchte 1 perspektivisch bzw. in einer Explosionsdarstellung gezeigt. Die Hinweisleuchte 1 weist ein im Wesentlichen quaderförmiges, flaches Gehäuse 2 auf, zu dem ein schalenförmiges Unter- oder Rückteil sowie ein im Wesentlichen flacher Deckel 4 gehören.

Das schalenförmige Rückteil ist einstückig und wird von paarweise zueinander parallelen Seitenwänden 5, 6, 7 und 8 sowie einem Boden 9 begrenzt. Die Seitenwände 5...8 umgrenzen ein Gehäuseinnenraum 11 und definieren einen Auflagerand 12 für die Frontplatte 4. Der Auflagerand 12 liegt im Wesentlichen in einer Ebene.

Im Abstand von den beiden Seitenwänden 5 und 7 ist der Boden 9 bei 13 eingezogen, derart, dass sich in der Ansicht, wie sie die Fig. 2 bietet, ein etwa U-förmiges Profil ergibt. Neben dem eingezogenen Bereich 13 entstehen zwei parallele, ebene Auflageflächen 15 und 16. Die Seitenwand 6 kann nach unten bis auf die Höhe einer Ebene, die durch die Flächen 15 und 16 begrenzt ist, verlängert sein, wodurch der eingezogene Bereich 13 oben durch die Seitenwand 6 abgeschlossen ist.

Der eingezogene Bereich 13 lässt in dem Gehäuseinnenraum 11 einen rechteckigen, ebenen Rückwandbereich 17 entstehen, der von paarweise zueinander parallelen Kanten 18 und 19, 21 und 22 begrenzt ist. Bei der Kante 18 geht der Rückwandbereich 17 einstückig in eine innere Seitenwand 23 über, die parallel und im Abstand zu der Seitenwand 6 verläuft. Hierdurch entsteht zwischen der inneren Seitenwand 16 und dem entsprechenden Teil der Seitenwand 6 ein Kanal 24, der zu der Kante 18 parallel läuft. Seine Länge entspricht der Länge der Kante 18.

Bei der Kante 19 öffnet sich die Seitenwand 8 unter Ausbildung eines Schlitzes 25 durch den hindurch, wie später noch beschrieben wird, ein Reflektor eingeschoben werden kann oder ein Bildträger. An der Rückseite des Rückwandbereiches 17 sind einstückig insgesamt drei Distanzhülsen 26 angeformt, und zwar eine im Bereich neben der Kante 19, während die anderen beiden nicht erkennbar im Eckbereich zwischen den Kanten 18 und 21 bzw. 18 und 22 ausgebildet sind. Durch diese Distanzhülsen 26 führen Bohrungen 27 hindurch zur Aufnahme von Befestigungsschrauben mit denen die Hinweisleuchte 1 an einer Wand anzuschrauben ist.

Die Kanten 21 und 22 sind, wie bereits erwähnt, von den Seitenwänden 5 und 7 ebenfalls beabstandet, so dass zwischen der Kante 22 und der Seitenwand 5 eine Kammer 28 entsteht, die tiefer ist gemessen ab dem Rand 12 als der Gehäuseinnenraum 11 im Bereich des Rückwandbereiches 17. Der Gehäuseinnenabschnitt 28 geht bei einem Schlitz 29 in den Kanal 24 über.

Ähnliche Verhältnisse bestehen zwischen der Kante 21 und der Seitenwand 7, wo eine Kammer 31 abgegrenzt ist, die einen Schlitz 32 mit dem Kanal 24 verbunden ist.

Im Bereich der Kammern 28 und 31 sind an der Innenseite der Seitenwände 6 und 8 wulstartige Vorsprünge 33 vorhanden, die Bohrungen 34 für Befestigungsschrauben der Frontabdeckung 4 enthalten.

Zwecks Abdichtung kann in dem Auflagerand 12 eine angedeutet sichtbare Dichtung 34 enthalten sein.

Die Frontabdeckung 4 hat in der Draufsicht eine etwa U-förmige Gestalt und setzt sich aus zwei zueinander parallelen Schenkel 35 und 36 sowie einem Rückenteil 37 zusammen. Die hierdurch umgrenzte rechteckige Öffnung schafft Platz für eine lichtdurchlässige Platte 38, die in einem umlaufenden Falz 39 an der Rückseite der Frontabdeckung 4 einklebbar ist.

Die lichtdurchlässige Platte 38 stellt bei dem gezeigten Ausführungsbeispiel einen Bildträger dar, auf dem sich ein Bild, worunter auch ein Text zu verstehen ist, befindet. Das Bild kann unmittelbar auf den Bildträger 38 aufgedruckt sein oder in Gestalt einer durchlässigen Folie auf diesen aufgeklebt oder sonst wie mit diesem verbunden sein. Dabei ist es gleichgültig, ob sich das Bild auf der Vorder- oder auf der Rückseite der lichtdurchlässigen Platte 38 befindet. Da sie die Hinweisesymbole trägt, wird sie im Folgenden auch als Bildträger bezeichnet.

Die Breite der Schenkel 35 und 36 entspricht der Breite der Kammern 28 und 31, während die Breite des Steges 27 auf die Breite des Kanals 24 abgestimmt ist. Damit hat die Größe des Bildträgers 38 etwa die Größe des Rückwandbereiches 17 bzw. ist mit diesem deckungsgleich.

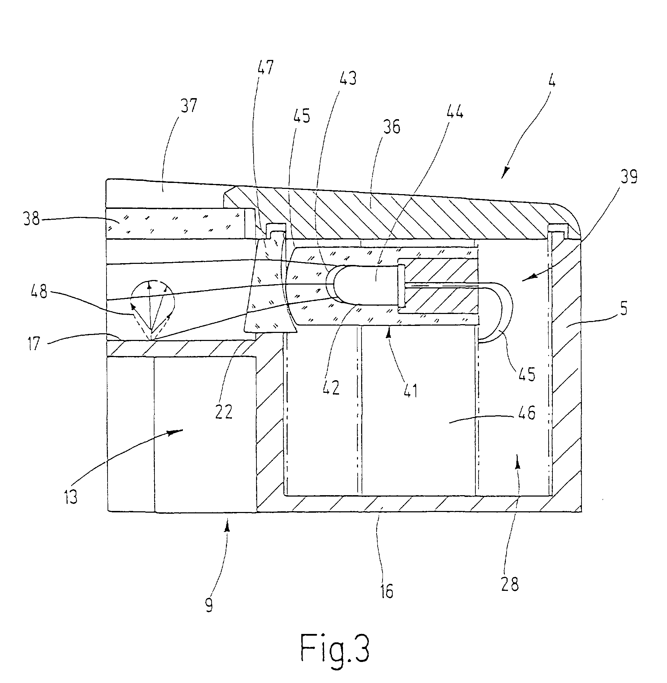

Die beiden Kammern 28 und 31 dienen der Aufnahme von Beleuchtungseinrichtungen 39. Der Aufbau der Beleuchtungseinrichtung ergibt sich aus der Schnittdarstellung von Fig. 3.

Zu der Beleuchtungseinrichtung 39 gehört ein vorzugsweise glasklarer länglicher Kunststoffkörper 41, der eine Vielzahl von zylindrischen Bohrungen 42 mit kalottenförmiger Stirnwand 43 enthält. Die Bohrungen 42 sind zueinander achsparallel und in Richtung des Kunststoffkörpers 41 nebeneinander auf einer Geraden angeordnet. Sie dienen der Aufnahme von jeweils einer Leuchtdiode 44, die vorzugsweise eine weiß leuchtende Leuchtdiode ist.

An der einen Stirnseite weist der Kunststoffkörper 41, fluchtend mit der jeweiligen Bohrung 42, eine linsenförmige Vorderfläche 45 auf. Die linsenförmige, kalottenförmige Vorderfläche 45 bildet mit der Kalottenfläche 43 eine Miniskus-Zerstreuungslinse, um den von der Leuchtdiode 44 ausgehenden Lichtkegel aufzuweiten.

Die Leichtdioden 44 sind mit ihren Anschlussdrähten 45 mit einer Leiterplatte 45 verbunden, über die die Stromzuleitung zu den Leuchtdioden 44 erfolgt. Auf der Leiterplatte 46 können nicht gezeigte elektronische Bauelemente sitzen, die dazu dienen, den Strom und/oder die Spannung für die Leuchtdioden 44 zu stabilisieren oder auf entsprechende Werte zu begrenzen.

Vor dem Kunststoffkörper 41 sitzt neben der Kante 22 ein optisches Prisma 47, dass sich, wie gezeigt, über die gesamte Länge der Kante 22 erstreckt und beispielsweise auf dem Rand bzw. der Kante 22 festgeklebt ist. Die spezielle Gestaltung des Prismas 47 ergibt sich aus der weiter unten angegebenen Funktionsbeschreibung.

Sowohl das Prisma 47 als auch der Kunststoffkörper 41 liegen, wie gezeigt, parallel zu einer Schmalseite des Rückwandbereiches 17. Der Rückwandbereich 17 ist auf seiner Innenseite, d.h. auf der dem Gehäuseinnenraum 11 zugekehrten Seite weiß diffus reflektierend ausgebildet. Er wirkt als diffuser Reflektor.

Falls das Kunststoffmaterial aus dem das Gehäuserückteil 3 hergestellt ist, sich nicht als diffuser Reflektor eignet, kann auf dem Rückwandbereich 17 ein entsprechender Reflektor angebracht werden. Die diffuse Reflexion des Rückwandbereiches 17 soll durch den Lichtkegel 48 angedeutet werden, wobei angestrebt wird, dass die Hauptachse dieser Strahlungskeule möglichst senkrecht zu dem Bildträger 38 ausgerichtet ist.

Der Vollständigkeit halber so noch erwähnt, dass auch in den Kammern 28 und 31 Pufferakkumulatoren untergebracht werden können, die einen Betrieb der Leuchte bei Stromausfall ermöglichen. Eine Stromzuführung kann von der Rückseite her beispielsweise im Bereich des Rücksprungs 13 erfolgen.

Die Betriebsweise der beschriebenen Hinweisleuchte ist wie folgt:
Von den beiden Zeilen aus Leuchtdioden 44 werden entsprechend der Anzahl der Leuchtdioden 44 Lichtkegel erzeugt, deren Hauptachse etwa parallel zu dem Rückwandbereich 17 ausgerichtet ist. Die Lichtkegel werden in dem optisch wirksamen Bereich zwischen der Kalottenfläche 43 und der Kalottenfläche 45 weiter aufgeweitet, um einen möglich großen Bereich des Prismas 47 auszuleuchten. Das Prisma 47 ist derart gestaltet, dass der Rückwandbereich 17 von den Lichtkegeln, die aus dem Prisma 47 austreten möglichst gleichmäßig beleuchtet wird. Insbesondere besteht der Zweck des Prismas 47 darin, auch jene Bereich des von einer Leuchtdiode 44 ausgehenden Lichtkegel für den Reflektor auszunutzen, der sonst wegen der Strahlrichtung den Reflektor nicht treffen würde, sondern unmittelbar die Rückseite des Bildträgers 38 beleuchten würde. Dies wäre nachteilig, da der Bildträger beispielsweise im Falle einer Acrylglasscheibe eine glatte und im Streiflicht spiegelnde Rückseite aufweist. Das Licht würde an dieser spiegelenden Rückseite lediglich wegreflektiert werden und nicht zur rückseitigen Beleuchtung des auf dem Bildträger 38 vorhanden Bildes beitragen.

Wenn hingegen dieses Licht über das Prisma 47 zu dem Reflektor sprich zu dem Rückwandbereich 17 umgelenkt wird, kann dort an einer entsprechend rauen Oberfläche eine diffuse Streuung hervorgerufen werden, die zu einem günstigeren Lichteinfallswinkel für den Bildträger 38 führt.

Um die Lichtverteilung zu steuern, kann die eine Seite des Prisma 47 mit einer konkaven Zylinderfläche versehen sein, deren Krümmungsachse zu der Reihe aus Leuchtdioden 44 parallel liegt.

Bei der gezeigten Anordnung wird der von dem Rückwandbereich 17 gebildete Reflektor von beiden Schmalseiten her ausgeleuchtet, und zwar über die gesamte Länge der betreffenden Schmalseite, wodurch eine relativ helle und relativ gleichmäßig diffus leuchtende Fläche erzeugt wird, an der viel Licht unmittelbar in Richtung senkrecht zu dem Bildträger 38 reflektiert wird. Das auf dem Bildträger 38 vorhandene Bild in Gestalt eines Textes, eines Symbols, eines Logos, eines Piktogramms und dergleichen, wird also sehr gut ähnlich wie ein Dia von der Rückseite her ausgeleuchtet, ohne dass über die Fläche des Bildes erkennbare Helligkeitsunterschiede auftreten.

Wie die Figuren erkennen lassen, ist der Abstand zwischen dem Reflektor 17 und dem Bildträger 38 vergleichsweise klein und entspricht etwa dem dreifachen Durchmesser einer Leuchtdiode. Deren Durchmesser liegt bei ca. 5mm.

Der Vorteil der Anordnung ist außerdem, dass Leuchtdioden mit niedriger Spannung betrieben werden und wegen ihres guten Wirkungsgrades nur eine geringe Oberflächentemperatur erzeugen. Die beschriebene Hinweisleuchte eignet sich deswegen auch leicht zur Verwendung in explosionsgefährdeten Bereichen, wenn dafür gesorgt wird, dass die übrige Beschaltung die Explosionsvorschriften erfüllt und auch die sonstige Gehäusegestaltung.

Anstelle von weißen Leuchtdioden können auch farbige Leuchtdioden verwendet werden, wenn ein entsprechender Lichteffekt gewünscht wird. Es können längs des Kunststoffkörpers 41 auch Leuchtdioden unterschiedlicher Farbe eingesetzt werden.

Anstatt das Bild auf dem Bildträger 38 direkt anzubringen und im Durchlichtverfahren zu beleuchten, kann die neue Hinweisleuchte auch im Auflichtverfahren arbeiten. Dazu wird auf dem Rückwandbereich 17, der dann als Bildträger fungiert, ein nicht durchscheinendes Bild aufgebracht, das nunmehr durch die glasklare und optisch nicht wirksame Platte 38 hindurch zu erkennen ist. Das Bild wird im Auflichtverfahren von den Leuchtdioden 44 wie zuvor erwähnt beleuchtet und ist damit durch die Platte 38 hindurch gut sichtbar zu erkennen. Da die Ausleuchtung wie vor erwähnt sehr gleichmäßig erfolgt, ist auch das auf dem Rückwandbereich 17 unmittelbar angebrachte Bild ohne Helligkeitsschwankungen zu erkennen.

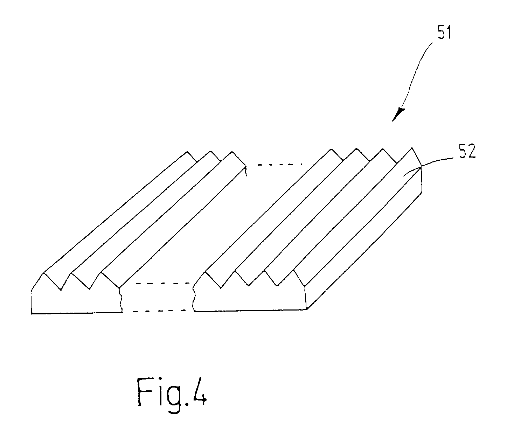

Eine weitere Steigerung der Helligkeit und/oder Vergleichmäßigung der Ausleuchtung läßt sich noch erreichen, wenn beim Betrieb im Durchlichtverfahren die Rückseite der Platte 38, die das Bild trägt gegebenenfalls geringfügig aufgeraut wird. Außerdem kann auf dem Rückwandbereich 17 ein Reflektor verwendet werden, der nicht diffus reflektierend sondern gerichtet reflektierend ist, wie dies schematisch in Fig. 4 gezeigt ist.

Dazu werden auf der optisch wirksamen reflektierenden Seite des Reflektors 51 ähnlich einer Fressnellinse Streifen 52 ausgebildet, die jedoch im Gegensatz zu der Fressnellinse nicht kreisförmig sondern gerade verlaufen. Die Streifen 52 liegen parallel zu der Längsachse der Kunststoffkörper 51 d.h. der Achse längs der die Leuchtdioden 44 parallel nebeneinander angeordnet sind. Der Winkel, den der jeweilige Streifen 52 mit einer Ebene einschließt, die zu der Fläche des Bildträgers 38 parallel liegt, ist so gewählt, dass das auf den betreffenden Streifen 52 fallende Licht möglichst rechtwinkelig in Richtung auf den Bildträger 38 wegreflektiert wird.

Da bei der Beleuchtung von zwei Seiten auch für die andere Leuchtseite ein entsprechender Satz von Streifen bereitgestellt wird, bekommt der Reflektor 51 an seiner optisch wirksamen Seite eine Struktur aus einer Vielzahl parallel nebeneinander liegender dreikantförmiger Leisten, wobei bei jede Leiste die eine Seitenfläche der einen Leuchtzeile und die andere Seitenfläche der anderen Leuchtzeile zugeordnet ist. Die beiden Seitenflächen, die die Streifen 52 bilden, sind im Winkel passend für die zugeordnete Leuchtzeile ausgerichtet und ändern sich somit entsprechend über den Abstand, den der Streifen 52 von der betreffenden Leuchtzeile hat.

Eine Hinweisleuchte (1) weist ein Gehäuse (2) auf, in dem seitlich zwei Zeilen von Leuchtdioden (44) angeordnet sind. Die Leuchtdiodenzeilen beleuchten einen Reflektor (17), der das Licht der Leuchtdioden (44) in Richtung auf einen lichtdurchlässigen Bildträger (38) reflektiert. Bei einer anderen Ausführungsform trägt der Reflektor selbst das Bild d.h. das Bild wird im Auflichtverfahren mit Hilfe von Leuchtdiodenzeilen beleuchtet.

## Patentansprüche

1. Hinweisleuchte (1)
mit einem flachen Gehäuse (2), das Seitenwände (5,6,7,8) und eine Rückwand (9) aufweist,
mit einem Reflektor (17,51),
mit wenigstens einer seitlich angeordneten Leuchtdiode (44), deren Licht zumindest zum Teil auf den Reflektor (17,51) fällt, und
mit einem lichtdurchlässigen Bildträger (38), der sich Abstand von dem Reflektor (17,51) befindet, derart, dass er von hinten im Durchlicht beleuchtet wird.

2. Hinweisleuchte (1)
mit einem flachen Gehäuse (2), das Seitenwände (5,6,7,8) aufweist,
mit einem Bildträger (17),
mit wenigstens einer Reihe von nebeneinander angeordneten Leuchtdioden (44), die neben dem Bildträger (17) angeordnet sind, derart, dass der Bildträger (17) streifend bzw. im Auflicht beleuchtet wird.

3. Leuchtschild nach Anspruch 1, **dadurch gekennzeichnet, dass** der Reflektor (17) von zumindest einem Teil der Rückwand gebildet ist.

4. Leuchtschild nach Anspruch 1, **dadurch gekennzeichnet, dass** der Reflektor (51) vor der Rückwand (17) angeordnet ist,

5. Leuchtschild nach Anspruch 2, **dadurch gekennzeichnet, dass** der Bildträger (17) eine Rückwand des Gehäuses (2) bildet.

6. Hinweisleuchte nach Anspruch 1, **dadurch gekennzeichnet, dass** mehrere Leuchtdioden (44) nebeneinander in einer Reihe angeordnet sind.

7. Hinweisleuchte nach den Ansprüchen 2 oder 6, **dadurch gekennzeichnet, dass** neben wenigstens zwei Seiten (21,22) des Reflektors (17,51) oder des Bildträgers (17) wenigstens je eine Reihe von Leuchtdioden (44) angeordnet ist.

8. Hinweisleuchte nach den Ansprüchen 2 oder 6, **dadurch gekennzeichnet, dass** die Leuchtdioden (44) gleichfarbig sind.

9. Hinweisleuchte nach den Ansprüchen 2 oder 6, **dadurch gekennzeichnet, dass** die Leuchtdioden (44) weiß leuchtende Leuchtdioden sind.

10. Hinweisleuchte nach Anspruch 1, **dadurch gekennzeichnet, dass** vor der Leuchtdiode (44) ein Prisma (47) angeordnet ist, das die Lichtstrahlen der Leuchtdioden (44) in Richtung auf den Reflektor (17,51) ablenkt.

11. Hinweisleuchte nach Anspruch 2, **dadurch gekennzeichnet, dass** vor den Leuchtdioden (44) ein Prisma (47) angeordnet ist, das die Lichtstrahlen der Leuchtdioden in Richtung auf den Bildträger (17,38) ablenkt.

12. Hinweisleuchte nach den Ansprüchen 10 oder 11, Anspruch 1, **dadurch gekennzeichnet, dass** eine Seite des Prisma (47) eine Zylinderfläche aufweist, deren Krümmungsachse parallel zu der Reihe der Leuchtdioden liegt.

13. Hinweisleuchte nach Anspruch 1, **dadurch gekennzeichnet, dass** der Reflektor (17) diffus reflektierend ausgebildet ist.

14. Hinweisleuchte nach Anspruch 1, **dadurch gekennzeichnet, dass** der Reflektor (51) gerichtet reflektierend ausgebildet ist.

15. Hinweisleuchte nach Anspruch 14, **dadurch gekennzeichnet, dass** der Reflektor (51) reflektierende Streifen (52) aufweist, deren Längsachse parallel zu der Reihe aus Leuchtdioden (44) ausgerichtet ist und deren Winkel gegenüber einer von dem Reflektor (51) definierten Ebene abhängig von dem Abstand ist, den der jeweilige Streifen (52) von der ihm zugeordneten Reihen von Leuchtdioden (44) aufweist.

16. Hinweisleuchte nach Anspruch 15, **dadurch gekennzeichnet, dass** die Streifen (52) derart ausgerichtet sind, dass das ankommende Licht etwa senkrecht in Richtung auf dem Bildträger (38) reflektiert wird.

17. Hinweisleuchte nach Anspruch 1, **dadurch gekennzeichnet, dass** sie explosionsgeschützt ausgeführt ist.

18. Hinweisleuchte nach den Ansprüchen 1 oder 2, **dadurch gekennzeichnet, dass** das Gehäuse (2) im Bereich des Reflektors (17,51) oder des Bildträgers (17) eine geringere Dicke aufweist.
